# EUROPEAN PATENT SPECIFICATION

(11) **EP 3 093 912 B1**
(45) Date of publication and mention of the grant of the patent: **28.02.2018**
(21) Application number: 16169476.5
(22) Date of filing: 13.05.2016
(51) Int. Cl.: H01M 10/04, H01M 10/0587

(54) **SECONDARY BATTERY**
SEKUNDÄRBATTERIE
BATTERIE SECONDAIRE

(30) Priority: 15.05.2015 JP 2015100035
(43) Date of publication of application: 16.11.2016
(73) Proprietor: Toyota Jidosha Kabushiki Kaisha, Toyota-shi, Aichi-ken, 471-8571 (JP)
(72) Inventor: KOBAYASHI, Keiichiro, TOYOTA-SHI, AICHI-KEN, 471-8571 (JP); YONEDA, Koshiro, TOYOTA-SHI, AICHI-KEN, 471-8571 (JP)
(74) Representative: Intès, Didier Gérard André

(56) References cited:
- EP-A2- 1 758 199
- JP-A- 2010 186 697
- US-A1- 2011 135 991

## Description

### BACKGROUND OF THE INVENTION

### 1. Field of the Invention

The present invention relates to a secondary battery.

### 2. Description of Related Art

A secondary battery, for example, a nonaqueous electrolyte secondary battery such as a lithium ion secondary battery has a lighter weight and a higher energy density than those of existing batteries. Therefore, recently, a nonaqueous electrolyte secondary battery has been preferably used as a so-called portable power supply for a PC, a portable device, or the like or as a drive power supply for a vehicle. In particular, it is expected that a light-weight lithium ion secondary battery capable of obtaining a high energy density will be increasingly widely used as a high-output power supply for driving a vehicle such as an electric vehicle (EV), a hybrid vehicle (HV), or a plug-in hybrid vehicle (PHV).

Typically, such a secondary battery has a structure in which a wound electrode body is accommodated in a battery case, the wound electrode body being obtained by laminating an elongated positive electrode sheet, an elongated negative electrode sheet, and an elongated separator to obtain a laminate and by winding the obtained laminate. A metal case is often used as a battery case from the viewpoint of obtaining high physical strength. In the wound electrode body, current collector portions are provided at both end portions in a width direction (direction perpendicular to a longitudinal direction). In the current collector portions, a positive electrode and a negative electrode are exposed. Therefore, when a battery case is formed of metal, for example, as described in Japanese Patent Application Publication No. 2013-222504 (JP 2013-222504 A), an electrode body is covered with a bag-shaped insulating film to insulate the battery case and the electrode body from each other. In order to prevent the electrode body from moving into the battery case due to vibration of a vehicle, the insulating film is fixed to the battery case by thermal welding.

### SUMMARY OF THE INVENTION

In order to improve the volumetric efficiency of a secondary battery, the present inventors studied a reduction in thickness of the insulating film. As a result of the study, it was found that, when a secondary battery repeatedly undergoes a temperature change between a high temperature (for example, 60°C or higher) and a low temperature (for example, -30°C or lower), there is a new problem: the insulating film is likely to break. When the insulating film is broken, the electrode body and the battery case may not be insulated from each other.

The present disclosure provides a secondary battery including an insulating film that is provided between an electrode body and a battery case, in which the breakage of the insulating film can be prevented even when a temperature change between a high temperature and a low temperature is repeated.

According to an aspect of the present disclosure, there is provided a secondary battery including: an electrode body including a positive electrode, a negative electrode, and a separator which is positioned on an outermost surface of the electrode body; a battery case that accommodates the electrode body; and an insulating film that is held in contact with the electrode body and the battery case. A thermal expansion coefficient of the battery case is lower than those of the insulating film and the separator. Portions of the insulating film, which are held in contact with the electrode body and the battery case, are adhered to the separator, which is positioned on the outermost surface of the electrode body, and the battery case, respectively. A first 90 degree peeling strength (hereinafter, also referred to as "peeling strength A") of an adhesion portion between the insulating film and the battery case is higher than a second 90 degree peeling strength (hereinafter, also referred to as "peeling strength B") of an adhesion portion between the insulating film and the separator. The first 90 degree peeling strength is equal to or greater than 15 mN/cm, and the second 90 degree peeling strength is equal to or greater than 5 mN/cm. With the above-described configuration, a secondary battery can be provided in which, even when a temperature change between a high temperature (for example, 60°C or higher) and a low temperature (for example, -30°C or lower) is repeated, the breakage of the insulating film can be prevented.

At least one surface of the insulating film may be hydrophilized, and the hydrophilized surface may face an inner wall of the battery case. With the above-described configuration, the first 90 degree peeling strength which is higher than the second 90 degree peeling strength can be easily obtained.

A thickness of the insulating film may be smaller than or equal to 70 µm. The use of the insulating film having a thickness in the above-described range is advantageous from the viewpoint of the volumetric efficiency of the battery. In addition, in particular, when a temperature change between a high temperature and a low temperature is repeated, an insulating film having a thickness in the above-described range is likely to break. Therefore, the effect of preventing the breakage of the insulating film is particularly significant.

The first 90 degree peeling strength may be comprised between 25 mN/cm and 50 mN/cm, and the second 90 degree peeling strength may be comprised between 5 mN/cm and 30 mN/cm. The secondary battery having the peeling strengths in the above-described range can be easily manufactured.

The battery case may be formed of aluminum or an aluminum alloy, the separator may be formed of polyolefin, and the insulating film may be formed of polyolefin. According to the above-described combination of materials, an appropriate first 90 degree peeling strength and an appropriate second 90 degree peeling strength can be easily obtained.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view schematically showing a configuration of a secondary battery according to an embodiment of the present disclosure;
FIG. 2 is a diagram schematically showing a configuration of the secondary battery according to the embodiment of figure 1;
FIG. 3 is a diagram showing a wound electrode body of the secondary battery according to the embodiment of figure 1;
FIG. 4A is a diagram showing an insulating film before being left to stand at a high temperature to describe the mechanism for the breakage of the insulating film;
FIG. 4B is a diagram showing the insulating film when being left to stand at a high temperature to describe the mechanism for the breakage of the insulating film; and
FIG. 4C is a diagram showing the insulating film when being left to stand at a low temperature to describe the mechanism for the breakage of the insulating film.

### DETAILED DESCRIPTION OF EMBODIMENTS

Hereinafter, an embodiment of the invention will be described with reference to the drawings. Matters (for example, general configurations of a battery and a process of manufacturing the same which are not characteristics of the invention) necessary to implement this invention other than those specifically referred to in this specification may be understood as design matters based on the related art in the pertinent field for a person of ordinary skill in the art. The invention may be implemented based on the contents disclosed in this specification and common technical knowledge in the subject field. In addition, parts or portions having the same function are represented by the same reference numerals. In each drawing, a dimensional relationship (for example, length, width, or thickness) does not reflect the actual dimensional relationship.

"Secondary battery" described in this specification refers to general storage devices which can be repeatedly charged and discharged and is a collective term for storage elements including so-called storage batteries such as a lithium ion secondary battery and electric double layer capacitors. Hereinafter, the embodiment of the present disclosure will be described in detail using a flat square lithium ion secondary battery as an example. The invention is not intended to be limited to the embodiment.

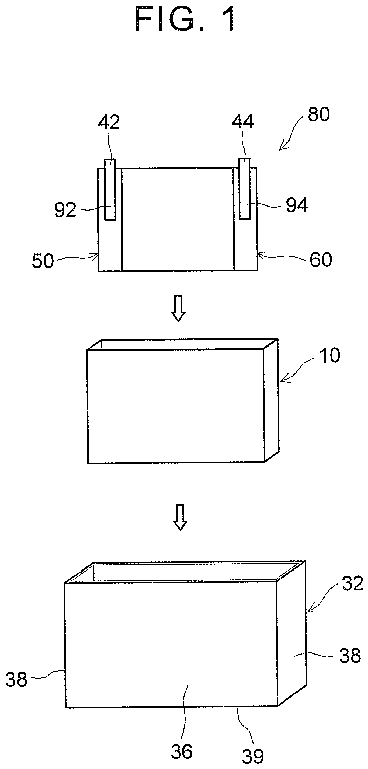

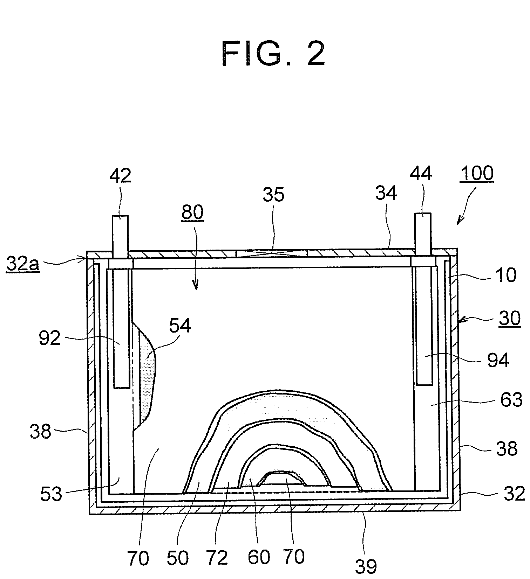

FIG. 1 is an exploded perspective view schematically showing a configuration of a lithium ion secondary battery 100 according to the embodiment. FIG. 2 is a diagram schematically showing a configuration (in particular, internal configuration) of the lithium ion secondary battery 100 according to the embodiment. As shown in FIGS. 1 and 2, the lithium ion secondary battery 100 includes an electrode body 80, a battery case 30, and an insulating film 10.

### [Electrode Body]

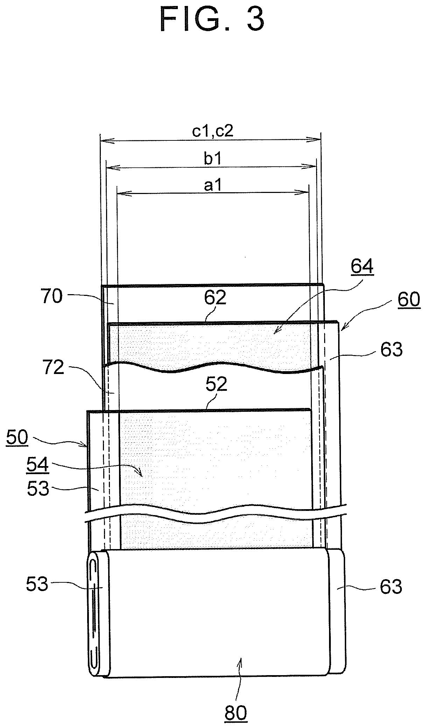

As shown in FIGS. 2 and 3, the electrode body 80 used in the embodiment is a flat wound electrode body 80 obtained by laminating a positive electrode (positive electrode sheet) 50, a negative electrode (negative electrode sheet) 60, and two separators 70, 72 to obtain a laminate and winding the obtained laminate. The separator 70 is positioned on the outermost surface of the wound electrode body 80. The electrode body 80 is not limited to the wound electrode body and may be a laminate electrode body. In the case of the laminate electrode body, the separator is positioned on the outermost surface. Here, the outermost surface refers to a surface which is exposed on the outermost side.

As shown in FIG. 3, the positive electrode sheet 50 includes an elongated positive electrode current collector (positive electrode core) 52. In addition, the positive electrode sheet 50 includes a positive electrode active material layer non-forming portion (non-coated portion) 53 and a positive electrode active material layer 54. The positive electrode active material layer non-forming portion 53 is provided along one edge of the positive electrode current collector 52 in the width direction. In the embodiment, the positive electrode active material layer 54 is formed on both surfaces of the positive electrode current collector 52 and may be formed on only one surface of the positive electrode current collector 52.

The positive electrode active material layer 54 contains a positive electrode active material. Typically, the positive electrode active material layer 54 may be joined to the positive electrode current collector 52 so that particles of the positive electrode active material and a conductive material bind to each other through a binder. Typically, the positive electrode sheet 50 can be manufactured using a method including: dispersing the positive electrode active material, the conductive material, and the binder in an appropriate solvent to prepare a positive electrode paste (including a slurry, an ink, and the like); supplying the positive electrode paste to the surface of the positive electrode current collector 52 other than the positive electrode active material layer non-forming portion 53; and drying the positive electrode paste to remove the solvent therefrom. As the positive electrode current collector 52, a conductive member formed of highly conductive metal (for example, aluminum, nickel, titanium, or stainless steel) can be preferably used. Here, an aluminum foil is used as the positive electrode current collector 52.

As the positive electrode active material, a lithium-containing compound (for example, lithium transition metal composite oxide) containing lithium and one kind or two or more kinds of transition metal elements can be preferably used, in which the lithium-containing compound is a material capable of storing and releasing lithium ions. Specific examples of the lithium-containing compound include a ternary lithium-containing composite oxide such as lithium nickel cobalt manganese composite oxide (for example, LiNi_{1/3}Co_{1/3}Mn_{1/3}O₂) and a polyanionic compound (for example, LiFePO₄ or LiMnPO₄).

The conductive material is not particularly limited as long as it is used in a lithium ion secondary battery of the related art, and examples thereof include a carbon material such as carbon powder or carbon fiber. As the carbon powder, for example, various carbon blacks and graphite powders can be used. Among these conductive materials, one kind can be used alone, or two or more kinds can be appropriately used in combination.

As the binder, binders which are used in a positive electrode of a general lithium ion secondary battery can be appropriately adopted. For example, when the positive electrode active material layer 54 is formed by supplying a paste, a polymer which can be uniformly dissolved or dispersed in a solvent constituting the paste can be used as the binder. Specific examples of the binder include polyvinylidene fluoride (PVDF).

As the solvent for dissolving the constituent materials of the above-described positive electrode active material layer 54, any one of an aqueous solvent and a nonaqueous solvent (organic solvent) can be used as long as it has properties corresponding to the properties of the binder used.

As shown in FIG. 3, the negative electrode sheet 60 includes an elongated negative electrode current collector (negative electrode core) 62. In addition, the negative electrode sheet 60 includes a negative electrode active material layer non-forming portion (non-coated portion) 63 and a negative electrode active material layer 64. The negative electrode active material layer non-forming portion 63 is provided along one edge of the negative electrode current collector 62 in the width direction. In the embodiment, the negative electrode active material layer 64 is formed on both surfaces of the negative electrode current collector 62 and may be formed on only one surface of the negative electrode current collector 62.

The negative electrode active material layer 64 contains a negative electrode active material. Typically, the negative electrode active material layer 64 may be joined to the negative electrode current collector 62 so that particles of the negative electrode active material bind to each other through a binder. Such a negative electrode sheet 60 can be manufactured, for example, by dispersing the negative electrode active material and the binder in an appropriate solvent (for example, water or N-methyl-2-pyrrolidone, preferably water) to obtain a negative electrode paste, supplying the negative electrode paste to the surface of the negative electrode current collector 62, and then drying the negative electrode paste to remove the solvent. As the negative electrode current collector 62, a conductive member formed of highly conductive metal (for example, copper, nickel, titanium, or stainless steel) can be preferably used. Here, a copper foil is used as the negative electrode current collector 62.

The negative electrode active material is not particularly limited. For example, as the negative electrode active material, one kind or a combination (a mixture or a complex) of two or more kinds can be used among various materials which can be used as a negative electrode active material for a lithium ion secondary battery. Preferable examples of the negative electrode active material include various carbon materials such as graphite, non-graphitizable carbon (hard carbon), and graphitizable carbon (soft carbon). In particular, it is preferable that amorphous carbon is arranged on at least a portion of a surface of the graphite-based material. In addition to the carbon material, for example, lithium titanium composite oxide such as LI₄Ti₅O₁₂ or lithium transition metal composite oxide such as lithium transition metal composite nitride may also be used.

As the binder, binders which are used in a negative electrode of a general lithium ion secondary battery can be appropriately adopted. For example, styrene-butadiene rubber (SBR) can be used.

In addition, depending on the method of forming the negative electrode active material layer 64, a thickener may be added. As the thickener, the same binders as described above may be used. For example, the following water-soluble or water-dispersible polymer may be adopted. Examples of the water-soluble polymer include cellulose polymers such as methyl cellulose (MC), carboxymethyl cellulose (CMC), and cellulose acetate phthalate (CAP); and polyvinyl alcohol (PVA).

The separators 70, 72 are members which separate the positive electrode sheet 50 and the negative electrode sheet 60 from each other. The separators 70, 72 are configured to have a function of holding the nonaqueous electrolyte and a shutdown function. As the separators 70, 72, a porous film formed of a resin such as polyethylene (PE), polypropylene (PP), polyester, cellulose, or polyamide can be used. In particular, a porous film formed of a polyolefin resin such as PE or PP is preferable. The separators 70, 72 may have a single-layer structure of one porous film; or a structure in which two or more porous films formed of different materials and having different properties (for example, average thickness or porosity) are laminated (for example, a three-layer structure in which a PP layer is laminated on both surfaces of a PE layer). A heat resistance layer (HRL) may be provided on surfaces of the separators 70, 72 on the negative electrode side.

The wound electrode body 80 may be prepared using a method including: laminating the positive electrode sheet 50 and the negative electrode sheet 60 with the separators 70, 72 between the positive electrode active material layer 54 and the negative electrode active material layer 64 to obtain a laminate; winding the obtained laminate to obtain a wound body; and pressing the obtained wound body from the side surface thereof to be squashed in a flat shape.

In the embodiment, as shown in FIG. 3, a width b1 of the negative electrode active material layer 64 is slightly wider than a width a1 of the positive electrode active material layer 54. Further, widths c1, c2 of the separators 70, 72 are slightly wider than the width b1 of the negative electrode active material layer 64 (c1, c2>b1>a1). The positive electrode sheet 50, the negative electrode sheet 60, and the separators 70, 72 are aligned in the longitudinal direction so as to overlap each other in the following order: the positive electrode sheet 50, the separator 70, the negative electrode sheet 60, and the separator 72. The positive electrode active material layer non-forming portion (non-coated portion) 53 of the positive electrode sheet 50 and the negative electrode active material layer non-forming portion (non-coated portion) 63 of the negative electrode sheet 60 protrude to opposite sides in the width direction of the separators 70, 72. The laminated sheet materials are wound around a winding axis set in the width direction.

### [Insulating Film]

The insulating film 10 is arranged between the electrode body 80 and the battery case 30 so as to separate the electrode body 80 and the battery case 30 from each other. Due to this insulating film 10, direct contact between the electrode body 80, which is a power generating element, and the battery case 30 can be avoided, and insulation between the electrode body 80 and the battery case 30 can be secured. In the embodiment, the insulating film 10 has a bottomed bag shape having an opening at an upper end, and the electrode body 80 (in particular, wound portion) can be accommodated in the insulating film 10 through the opening. The shape of the insulating film 10 is not limited to a bag shape as long as the electrode body 80 and the battery case 30 can be insulated from each other. For example, the insulating film 10 may be a cylindrical film or a planar film. The material of the insulating film 10 is not particularly limited as long as it can function as an insulating member. For example, a resin material such as polyolefin (for example, polypropylene (PP) or polyethylene (PE)) can be preferably used.

The thickness of the insulating film 10 is not particularly limited, and it is preferable that the thickness of the insulating film 10 is small from the viewpoint of the volumetric efficiency of the battery. Specifically, the thickness of the insulating film 10 is preferably smaller than or equal to 70 µm, more preferably smaller than or equal to 60 µm, still more preferably smaller than or equal to 58 µm, and even still more preferably smaller than or equal to 55 µm. On the other hand, from the viewpoint of film strength, the thickness of the insulating film 10 is preferably equal to or greater than 30 µm, more preferably equal to or greater than 40 µm, still more preferably equal to or greater than 42 µm, and even still more preferably equal to or greater than 45 µm. In particular, when the thickness of the insulating film 10 is smaller than or equal to 70 µm (in particular, smaller than or equal to 60 µm), when a temperature change between a high temperature and a low temperature is repeated, the insulating film 10 is likely to break. However, in the embodiment, even in a case where the thickness of the insulating film 10 is within the above-described range, when a temperature change between a high temperature and a low temperature is repeated, the breakage of the insulating film 10 is sufficiently prevented. In the embodiment, the insulating film 10 has a thickness of 50 µm.

### [Battery Case]

As shown in FIG. 2, the battery case 30 according to the embodiment is a so-called square (typically, a cuboid shape) battery case having 8 corner portions in total which is formed such that an internal space thereof has a box shape corresponding to the wound electrode body 80. The battery case 30 includes a case body 32 and a lid 34. The case body 32 has a bottomed square cylindrical shape and is a flat box-shaped container having an opening on one surface (top surface). The lid 34 is a member that is attached to the opening (upper opening) of the case body 32 to cover the opening. The case body 32 can accommodate the electrode body 80 and the insulating film 10 through the upper opening. The case body 32 includes: a pair of wide side surfaces 36 (FIG. 1) that face a flat surface of the wound electrode body 80 to be accommodated in the case; a pair of narrow side surfaces 38 that are adjacent to the wide side surfaces 36; and a bottom surface 39.

As the material of the battery case 30, a material having a lower thermal expansion coefficient than the insulating film 10 and the separators 70, 72 is selected. Examples of a material having a lower thermal expansion coefficient than materials, which are usually used for the insulating film 10 and the separators 70, 72, include: a metal material such as aluminum, stainless steel, or nickel-plated steel; and a resin material such as a polyphenylene sulfide resin or a polyimide resin. Among these, a metal material is preferable. The battery case 30 (specifically, the case body 32 and the lid 34) used in the embodiment is formed aluminum or an aluminum alloy.

### [Overall Configuration of Battery]

In the embodiment, the lithium ion secondary battery 100 is configured to have a size suitable for a vehicle. As shown in FIGS. 1 and 2, the battery case 30 has a flat rectangular internal space as a space that accommodates the wound electrode body 80. The flat rectangular internal space of the battery case 30 has a slightly larger width than the wound electrode body 80. The wound electrode body 80 is accommodated in the internal space of the battery case 30 in a state of being deformed in a flat shape in a direction perpendicular to the winding axis. The insulating film 10 is arranged between the case body 32 and the wound electrode body 80 such that the case body 32 and the wound electrode body 80 are insulated from each other. A positive electrode terminal 42 and a negative electrode terminal 44 are attached to the lid 34 of the battery case 30. The positive electrode terminal 42 and the negative electrode terminal 44 penetrate the battery case 30 (lid 34) and protrude from the battery case 30 to the outside. In addition, a safety valve 35 is provided on the lid 34. An injection hole (not shown), through which an electrolytic solution (not shown) is injected during battery manufacturing, is provided adjacent to the safety valve 35. A joint 32a between the lid 34 and the case body 32 is sealed by, for example, laser welding.

In the wound electrode body 80, the positive electrode active material layer non-forming portion (non-coated portion) 53 of the positive electrode sheet 50 and the negative electrode active material layer non-forming portion (non-coated portion) 63 of the negative electrode sheet 60 protrude to opposite sides in the width direction of the separators 70, 72. A positive electrode current collector terminal 92 is provided in the positive electrode active material layer non-forming portion 53 and is connected to the above-described positive electrode terminal 42. The positive electrode current collector terminal 92 is formed of, for example, aluminum or an aluminum alloy. In this example, as shown in FIG. 2, the positive electrode current collector terminal 92 extends to the center of the positive electrode active material layer non-forming portion 53 of the wound electrode body 80. A tip end portion of the positive electrode current collector terminal 92 is welded (for example, by ultrasonic welding) to the center of the positive electrode active material layer non-forming portion 53. A negative electrode current collector terminal 94 is provided in the negative electrode active material layer non-forming portion 63 and is connected to the above-described negative electrode terminal 44. The negative electrode current collector terminal 94 is formed of, for example, copper or a copper alloy. The negative electrode current collector terminal 94 extends to the center of the negative electrode active material layer non-forming portion 63 of the wound electrode body 80. A tip end portion of the negative electrode current collector terminal 94 is welded (for example, by resistance welding) to the center of the negative electrode active material layer non-forming portion 63.

An electrolytic solution (not shown) is sealed in the battery case 30. As the electrolytic solution, a nonaqueous electrolytic solution can be preferably used containing: a nonaqueous solvent; and a lithium salt (supporting electrolyte) which is soluble in the solvent. As the nonaqueous solvent, aprotic solvents such as carbonates, esters, ethers, nitriles, sulfones, and lactones can be used. For example, one kind or two or more kinds selected from well-known nonaqueous solvents, which can be generally used as an electrolytic solution for a lithium ion secondary battery, can be used. Examples of the well-known nonaqueous solvents include ethylene carbonate (EC), propylene carbonate (PC), diethyl carbonate (DEC), dimethyl carbonate (DMC), ethyl methyl carbonate (EMC), 1,2-dimethoxyethane, 1,2-diethoxyethane, tetrahydrofuran, 2-methyltetrahydrofuran, dioxane, 1,3-dioxolane, diethylene glycol dimethyl ether, ethylene glycol dimethyl ether, acetonitrile, propionitrile, nitromethane, N,N-dimethylformamide, dimethyl sulfoxide, sulfolane, and γ-butyrolactone.

As the supporting electrolyte, one kind or two or more kinds selected from various well-known lithium salts, which can be generally used as a supporting electrolyte in an electrolytic solution for a lithium ion secondary battery, can be used. Examples of the well-known lithium salts include LiPF₆, LiBF₄, LiN(SO₂CF₃)₂, LiN(SO₂C₂F₅)₂, LiCF₃SO₃, LiC₄F₉SO₃, LiC(SO₂CF₃)₃, and LiClO₄. The concentration of the supporting electrolyte is not particularly limited and, for example, may be the same as that in an electrolytic solution which is used for a lithium ion secondary battery of the related art. Typically, it is preferable that the concentration of the supporting electrolyte in the nonaqueous electrolytic solution is about 0.1 mol/L to 5 mol/L (for example, about 0.8 mol/L to 1.5 mol/L).

From the viewpoint of further improving the characteristics of the lithium ion secondary battery 100, the nonaqueous electrolytic solution may further contain additives such as a film forming agent, an overcharge additive, a surfactant, a dispersant, or a thickener.

In the embodiment, portions of the insulating film 10, which are held in contact with the electrode body 80 and the battery case 30, are adhered to the separator 70, which is positioned on the outermost surface of the electrode body 80, and the battery case 30, respectively. In the portions of the insulating film 10 which are held in contact with the electrode body 80 and the battery case 30, the insulating film 10 is held in surface contact with the electrode body 80 and the battery case 30 while receiving pressure therefrom. In JP 2013-222504 A of the related art, the insulating film 10 is adhered to only the battery case 30 by thermal welding with only the battery case 30. On the other hand, in the embodiment, the insulating film 10 is adhered to both the battery case 30 and the separator 70.

Regarding the adhesion strength (peeling strength), a 90 degree peeling strength A of an adhesion portion between the insulating film 10 and the battery case 30 is higher than a 90 degree peeling strength B of an adhesion portion between the insulating film 10 and the separator 70. The 90 degree peeling strength A is equal to or greater than 15 mN/cm, and the 90 degree peeling strength B is equal to or greater than 5 mN/cm. By satisfying the above-described adhesion strength conditions, the lithium ion secondary battery 100 is provided, in which the breakage of the insulating film 10 can be prevented even when a temperature change between a high temperature and a low temperature is repeated. The reason is presumed to be as follows.

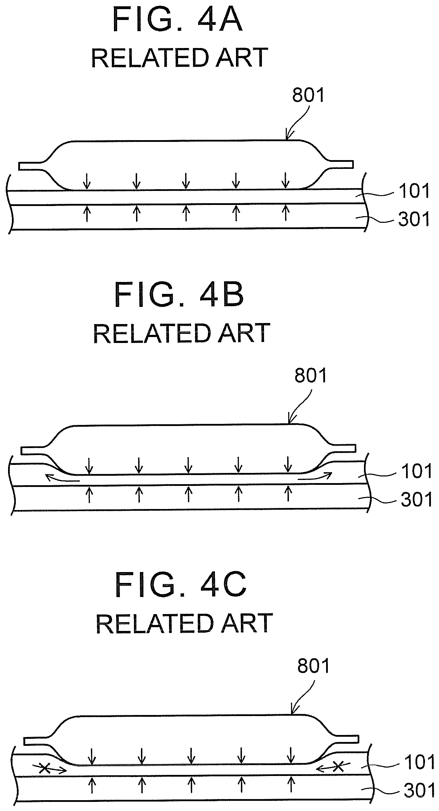

FIGS. 4A to 4C are diagrams showing the mechanism for the breakage of the insulating film. FIGS. 4A to 4C show only a part of the electrode body, the insulating film, and the battery case (wide side surface) in a section of the secondary battery parallel to the lid and the case bottom surface. As shown in FIG. 4A, an insulating film 101 is tightly held in contact with a battery case 301 and an electrode body 801 while receiving pressure from the battery case 301 and the electrode body 801. In general, in a secondary battery, the thermal expansion coefficient of a battery case is lower than those of an insulating film and a separator. Accordingly, when the secondary battery is placed at a high temperature (for example, 60°C or higher), the insulating film 101 is more likely to expand than the battery case 301 because the insulating film 101 has a higher thermal expansion coefficient than the battery case 301. At this time, a part of the insulating film 101 expands so as to detach from the portions which are held in contact with the battery case 301 and the electrode body 801. As a result, as shown in FIG. 4B, the thickness of the portions of the insulating film 101 that are held in contact with the battery case 301 and the electrode body 801 is decreased, and the thickness of the portions of the insulating film 101 that are not held in contact with the battery case 301 and the electrode body 801 is increased. When the secondary battery is placed at a low temperature (for example, -30°C or lower), the insulating film 101 is about to shrink. However, since the insulating film 101 is tightly held in contact with the battery case 301 and the electrode body 801, as shown in FIG. 4C, the thick portions cannot return to the portions of the insulating film 101 which are held in contact with the battery case 301 and the electrode body 801. In this way, due to the temperature change from a high temperature to a low temperature, the thickness of the portions of the insulating film 101 that are held in contact with the battery case 301 and the electrode body 801 is decreased, and the thickness of the portions of the insulating film 101 that are not held in contact with the battery case 301 and the electrode body 801 is increased. When a temperature change from a high temperature to a low temperature is repeated, the above-described increase and decrease in thickness slowly progress. When the thickness of the portions of the insulating film 101 that are held in contact with the battery case 301 and the electrode body 801 is excessively decreased, the insulating film 101 is broken.

On the other hand, in the embodiment, the insulating film 10 is adhered to both the battery case 30 and the separator 70. When the lithium ion secondary battery 100 according to the embodiment is placed at a high temperature (for example 60°C or higher), a part of the insulating film is about to detach from the portions which are held in contact with the battery case 30 and the electrode body 80. However, since the insulating film 10 is adhered to both the battery case 30 and the separator 70, the insulating film 10 cannot detach from the portions which are held in contact with the battery case 30 and the electrode body 80. As a result, the thickness of the portions of the insulating film 10 which are held in contact with the battery case 30 and the electrode body 80 can be prevented from decreasing due to a temperature change from a high temperature to a low temperature. Accordingly, even when a temperature change from a high temperature to a low temperature is repeated, the thickness of the portions of the insulating film 10 which are held in contact with the battery case 30 and the electrode body 80 can be maintained to be sufficiently thick. As a result, the breakage of the insulating film 10 can be prevented.

In the embodiment, the 90 degree peeling strength A of the adhesion portion between the insulating film 10 and the battery case 30 is higher than the 90 degree peeling strength B of the adhesion portion between the insulating film 10 and the separator 70. The reason for this is presumed to be as follows. The thermal expansion coefficient of the battery case 30 is lower than that of the separator 70. Therefore, when the 90 degree peeling strength A is lower than the 90 degree peeling strength B, the insulating film 10 may break. When experimentally verified in Examples described below, in order to prevent the breakage of the insulating film 10, the 90 degree peeling strength A is equal to or greater than 15 mN/cm, and the 90 degree peeling strength B is equal to or greater than 5 mN/cm.

It is presumed that the insulating film is likely to break when the dimension of the portions of the insulating film which are held in contact with the battery case and the electrode body is high (for example, when the length in the width direction of a portion of the electrode body in contact with the insulating film is 100 mm or longer). Accordingly, in the embodiment, it is important to configure the lithium ion secondary battery 100 to have a size suitable for a vehicle (a size of 100 mm or longer corresponding to the length in the width direction of a portion of the electrode body 80 in contact with the insulating film 10).

In order to adjust the 90 degree peeling strength A to be equal to or greater than 15 mN/cm, in the embodiment, a method of hydrophilizing at least one surface of the insulating film 10 is adopted. "Hydrophillic treatment" described herein refers to a treatment of introducing a hydrophilic group such as a hydroxyl group or a carboxyl group into a surface of a material. Due to the hydrophillic treatment, the amount of hydrophilic groups on one surface of insulating film 10 is more than that in the other surface of the insulating film 10. Examples of the hydrophillic treatment include a corona discharge treatment, a plasma treatment, and an ozone treatment. Among these, a corona discharge treatment is preferable from the viewpoint of high practicability.

First, the bag-shaped insulating film 10 having at least one hydrophilized surface is prepared. At this time, the hydrophilized surface is arranged to be a surface (outer surface) on the battery case 30 side. Next, using this insulating film 10, a battery cell is constructed in which the insulating film 10 is held in contact with the battery case 30 and the wound electrode body 80. By performing a heat treatment on the constructed battery cell, the insulating film 10 and the battery case 30 can be adhered to each other. The heat treatment can be performed by performing a cell drying step and a high-temperature aging step during the manufacturing of the secondary battery. The cell drying step is performed at, for example, 80°C to 115°C. The high-temperature aging step is performed at, for example, 50°C or higher (typically 50°C to 80°C). The high-temperature aging step is performed while applying restraining pressure using, for example, a restraining jig such that the insulating film 10 and the battery case 30 are adhered to each other.

By performing the cell drying step and the high-temperature aging step, the insulating film 10 and the battery case 30 are strongly adhered to each other, and the 90 degree peeling strength A can be adjusted to be equal to or greater than 15 mN/cm. Here, by changing conditions (for example, temperature conditions) of the cell drying step and the high-temperature aging step, the 90 degree peeling strength A can be adjusted. By changing the material of the battery case 30, the 90 degree peeling strength A can be adjusted. As a result, by performing a well-known battery manufacturing step, a high 90 degree peeling strength A can be obtained. Therefore, there is an advantageous effect from the viewpoint of the production efficiency of the lithium ion secondary battery 100. In particular, a 90 degree peeling strength A comprised between 25 mN/cm and 50 mN/cm can be easily obtained.

Using the above-described method, the 90 degree peeling strength A can be adjusted to be 15 mN/cm or higher. Therefore, in the lithium ion secondary battery 100 according to the embodiment, at least one surface of the insulating film 10 is hydrophilized, and the hydrophilized surface faces an inner wall of the battery case 30. The hydrophilized surface of the insulating film 10 is adhered in contact with the inner wall of the battery case 30.

Examples of another method for adjusting the 90 degree peeling strength A to be equal to or greater than 15 mN/cm include a method of applying an adhesive having an appropriate adhesion strength to at least a contact portion between the insulating film 10 and the battery case 30 to adhere the insulating film 10 and the battery case 30 to each other. Instead of the adhesive, a double-sided adhesive tape can be used.

In a method for adjusting the 90 degree peeling strength B to be equal to or greater than 5 mN/cm, a blocking phenomenon between films, that is, a phenomenon in which films overlapping each other are adhered to each other is used. In the embodiment, the separator 70 is formed of a polyolefin porous film, and the insulating film 10 is also formed of polyolefin. In addition, a surface modification treatment (in particular, a corona discharge treatment) is performed on the separator 70. During the manufacturing of the secondary battery, the separator 70 and the insulating film 10 are adhered to each other, and the cell drying step and the high-temperature aging step are performed. As a result, a 90 degree peeling strength equal to or greater than 5 mN/cm can be obtained. Here, by changing conditions (for example, temperature conditions) of the cell drying step and the high-temperature aging step, the 90 degree peeling strength B can be adjusted. As a result, by performing a battery manufacturing step of the related art, a high 90 degree peeling strength B can be obtained. Therefore, there is an advantageous effect from the viewpoint of the production efficiency of the lithium ion secondary battery 100. In particular, a 90 degree peeling strength B comprised between 5 mN/cm and 30 mN/cm can be easily obtained.

Examples of another method for adjusting the 90 degree peeling strength B to be equal to or greater than 5 mN/cm include a method of applying an adhesive having an appropriate adhesion strength to at least a contact portion between the insulating film 10 and the separator 70 to adhere the insulating film 10 and the separator 70 to each other. Instead of the adhesive, a double-sided adhesive tape can be used.

From the above-described viewpoints, it is preferable that the lithium ion secondary battery 100 according to the embodiment is manufactured using a method including: a step of preparing the electrode body 80, the battery case 30, and the insulating film 10 having the at least hydrophilized inner surface or outer surface; a step of constructing a battery cell in which the insulating film 10 and the electrode body 80 are accommodated in the battery case 30 such that the insulating film 10 is held in contact with the battery case 30 and the electrode body 80 and that the surface of the insulating film 10, on which the above-described treatment is performed, faces the inner wall of the battery case 30; and a step (in particular, the cell drying step and/or the high-temperature aging step) of heating the battery case while pressing the battery case such that the electrode body 80 and the insulating film 10 are adhered to each other and that the insulating film 10 and the battery case 30 are adhered to each other

From the viewpoint of obtaining an appropriate 90 degree peeling strength A and an appropriate 90 degree peeling strength B, a combination of the battery case 30 formed of aluminum or an aluminum alloy, the separators 70, 72 formed of polyolefin, and the insulating film 10 formed of polyolefin is particularly advantageous.

The lithium ion secondary battery 100 can be used for various applications. Preferable examples of the applications include driving power supplies mounted in vehicles such as an electric vehicle (EV), a hybrid vehicle (HV), and a plug-in hybrid vehicle (PHV). The lithium ion secondary battery 100 may be used in the form of a battery pack in which, typically, plural lithium ion secondary batteries are connected to each other in series and/or in parallel.

Hereinafter, several examples relating to the invention will be described, but the examples according to the invention are not intended to limit the invention.

### [Preparation of Secondary Battery]

LiNi_{1/3}Co_{1/3}Mn_{1/3}O₂ powder as a positive electrode active material; acetylene black as a conductive material; and PVDF as a binder were kneaded with each other in N-methyl-2-pyrrolidone at 93/4/3 (mass ratio). As a result, a slurry for forming a positive electrode active material layer was prepared. This slurry was applied to both surfaces of an aluminum foil (positive electrode current collector) and was dried. Next, by pressing the aluminum foil, a positive electrode including a positive electrode active material layer formed on a positive electrode current collector was prepared. Next, graphite as a negative electrode active material; SBR as a binder; and CMC as a thickener were kneaded with each other in ion exchange water at 98/1/1 (mass ratio). As a result, a slurry for forming a negative electrode active material layer was prepared. This slurry was applied to both surfaces of a copper foil (negative electrode current collector) and was dried. Next, by roll-pressing the copper foil, a negative electrode including a negative electrode active material layer formed on a negative electrode current collector was prepared. Two separators having a three-layer structure of PP/PE/PP were prepared. A corona discharge treatment was performed on the separators.

A laminate in which the positive electrode, the separator, the negative electrode, and the separator were laminated in this order was wound to prepare an electrode body. During winding, the separator was positioned on the outermost surface. A bag-shaped insulating film was prepared using a polypropylene film (thickness: 50 µm) having a single surface on which a corona discharge treatment was performed or using a polypropylene film (thickness: 50 µm) on which a corona discharge treatment was not performed. As a nonaqueous electrolytic solution, a solution was used in which LiPF₆ as a supporting electrolyte was dissolved in a mixed solvent at a concentration of 1.1 mol/L, the mixed solvent containing EC, DMC, and EMC at a volume ratio (EC:DMC:EMC) of 30/40/30.

Lead terminals were welded to the positive and negative electrodes of the electrode body. Next, the positive and negative electrodes were accommodated in the bag-shaped insulating film, and not only the electrode body but also the insulating film were accommodated in a battery case formed of aluminum (A3003). As a result, a battery cell was obtained. Cell drying was performed on the battery cell. Next, a nonaqueous electrolytic solution was injected into the battery cell, and initial charging and high-temperature aging were performed thereon. In this way, Batteries Nos. 1 to 15 were prepared. In order to change the 90 degree peeling strength A and the 90 degree peeling strength B, in Batteries Nos. 1 to 10, the surface of the polypropylene film on which the corona discharge treatment was performed was adjusted to be an outer surface (a surface to be in contact with the inner wall of the battery case); and in Batteries Nos. 11 to 14, the surface of the polypropylene film on which the corona discharge treatment was performed was adjusted to be an inner surface (a surface to be in contact with the separator of the electrode body). In Battery No. 15, the polypropylene film on which the corona discharge treatment was not performed was used. In addition, in order to change the 90 degree peeling strength A and the 90 degree peeling strength B, cell drying conditions and high-temperature aging conditions were changed for each battery.

### [Evaluation of Peeling Strength]

For convenience, regarding a sample exposed to the same conditions as manufacturing conditions of each of Batteries Nos. 1 to 15, the peeling strength was measured.

### (1) 90 Degree Peeling Strength A

The polypropylene film used to prepare the bag-shaped insulating film of each of Batteries Nos. 1 to 15 was cut into a strip shape having a size of 10 mm×150 mm. This polypropylene film was adhered to a sheet formed of aluminum (A3003) as the same material as that of the battery case. At this time, when the corona discharge treatment was performed on the polypropylene film, the direction of the surface on which the corona discharge treatment was performed was adjusted as shown in the manufacturing conditions of each of Batteries Nos. 1 to 14. Next, the sample was exposed to the same conditions as cell drying conditions and high-temperature aging conditions during the manufacturing of each of Batteries Nos. 1 to 15. Regarding each of the samples obtained as described above, the 90 degree peeling strength was measured using a tensile testing machine ("SV-201NA-50SL" manufactured by Imada Seisakusho Co., Ltd.). Specifically, the sample was fixed to a horizontally movable table through a double-sided adhesive tape, and the polypropylene film was vertically pulled and peeled off at a rate of 20 mm/min while moving the table. At this time, the load was measured.

### (2) 90 Degree Peeling Strength B

The polypropylene film used to prepare the bag-shaped insulating film of each of Batteries Nos. 1 to 15 was cut into a strip shape having a size of 10 mm×150 mm. The polypropylene film was adhered to the separator used for the manufacturing of the battery. At this time, when the corona discharge treatment was performed on the polypropylene film, the direction of the surface on which the corona discharge treatment was performed was adjusted as shown in the manufacturing conditions of each of Batteries Nos. 1 to 14. Next, the sample was exposed to the same conditions as cell drying conditions and high-temperature aging conditions during the manufacturing of each of Batteries Nos. 1 to 15. Regarding each of the samples obtained as described above, as in the case of the 90 degree peeling strength A, the 90 degree peeling strength was measured using a tensile testing machine ("SV-201NA-50SL" manufactured by Imada Seisakusho Co., Ltd.).

### [Evaluation for Breakage of Separator]

Using each of the obtained Secondary Batteries Nos. 1 to 15, a thermal shock cycling test was performed. Specifically, a temperature change in which each of the secondary batteries was heated to a temperature of 60°C or higher and then was cooled to a temperature of -30°C or lower was set as one cycle. Each of the secondary batteries underwent 1000 cycles of temperature change. Next, each of the secondary batteries was disassembled to determine whether or not the separator was broken. The evaluation results are shown in Table 1.

**[Table 1]**

| Battery No. | Peeling Strength A (mN/cm) | Peeling Strength B (mN/cm) | Peeling Strength A/ Peeling Strength B | Breakage of Separator |
|---|---|---|---|---|
| 1 | 43 | 9 | 4.8 | Not Broken |
| 2 | 44 | 11 | 4 | Not Broken |
| 3 | 34 | 9 | 3.8 | Not Broken |
| 4 | 34 | 11 | 3.1 | Not Broken |
| 5 | 32 | 12 | 2.7 | Not Broken |
| 6 | 34 | 16 | 2.1 | Not Broken |
| 7 | 32 | 20 | 1.6 | Not Broken |
| 8 | 23 | 7 | 3.3 | Not Broken |
| 9 | 15 | 5 | 3.0 | Not Broken |
| 10 | 15 | 0 | - | Broken |
| 11 | 15 | 20 | 0.75 | Broken |
| 12 | 7 | 17 | 0.4 | Broken |
| 13 | 5 | 18 | 0.3 | Broken |
| 14 | 4 | 16 | 0.3 | Broken |
| 15 | 0 | 0 | - | Broken |

As shown in Table 1, in Secondary Batteries Nos. 1 to 9 in which the peeling strength A was higher than the peeling strength B which was equal to or greater than 5 mN/cm, the breakage of the separator was prevented. On the other hand, in Secondary Battery No. 10 corresponding to the technique of the related art in which the insulating film and the separator were not adhered to each other, the separator was broken. In Secondary Batteries Nos. 11 to 14 in which the peeling strength A was lower than the peeling strength B, the separator was broken. In Secondary Battery No. 15 in which the insulating film was not adhered to the battery case and the separator, the separator was broken.

Hereinabove, the specific examples of the invention have been described in detail. However, these examples are merely exemplary. The invention includes various modifications and alternations of the above-described specific examples. For example, within a range where the effects of the invention are obtained, as long as an adhesion surfaces is substantially formed, the entire surface of the adhesion surface may not have a predetermined peeling strength (a peeling strength A equal to or greater than 15 mN/cm or a peeling strength B equal to or greater than 5 mN/cm). That is, the peeling strength of a part of the adhesion surface may be lower than a predetermined value. For example, when the insulating film is adhered to the separator or the battery case, on the adhesion surface, a double-sided adhesive tape or an adhesive may be provided at intervals (for example, in a stripe shape).

## Claims

1. A secondary battery, comprising:
an electrode body (80) including a positive electrode, a negative electrode, and a separator (70) which is positioned on an outermost surface of the electrode body;
a battery case (30) that accommodates the electrode body; and
an insulating film (10) that is held in contact with the electrode body and the battery case,:
a thermal expansion coefficient of the battery case (30) is lower than those of the insulating film and the separator,
portions of the insulating film (10), which are held in contact with the electrode body and the battery case, are adhered to the separator (70), which is positioned on the outermost surface of the electrode body, and the battery case (30), respectively,
a first 90 degree peeling strength of an adhesion portion between the insulating film (10) and the battery case (30) is higher than a second 90 degree peeling strength of an adhesion portion between the insulating film (10) and the separator (70),
the first 90 degree peeling strength is equal to or greater than 15 mN/cm, and
the second 90 degree peeling strength is equal to or greater than 5 mN/cm.

2. The secondary battery according to claim 1, wherein
at least one surface of the insulating film (10) is hydrophilized, and
the hydrophilized surface faces an inner wall of the battery case (30).

3. The secondary battery according to claim 1 or 2, wherein
a thickness of the insulating film (10) is smaller than or equal to 70 µm.

4. The secondary battery according to any one of claims 1 to 3, wherein
the first 90 degree peeling strength is comprised between 25 mN/cm and 50 mN/cm, and
the second 90 degree peeling strength is comprised between 5 mN/cm and 30 mN/cm.

5. The secondary battery according to any one of claims 1 to 4, wherein
the battery case (30) is formed of aluminum or an aluminum alloy,
the separator (70) is formed of polyolefin, and
the insulating film (10) is formed of polyolefin.

6. The secondary battery according to any one of claims 1 to 5, wherein the electrode body (80) is a wound electrode body.

## Patentansprüche

1. Sekundärbatterie, umfassend:
einen Elektrodenkörper (80), der eine positive Elektrode, eine negative Elektrode und einen Separator (70) enthält, der auf einer äußersten Fläche des Elektrodenkörpers positioniert ist,
ein Batteriegehäuse (30), das den Elektrodenkörper aufnimmt, und
einen Isolierfilm (10), der mit dem Elektrodenkörper und dem Batteriegehäuse in Kontakt gehalten wird,
wobei
ein Wärmeausdehnungskoeffizient des Batteriegehäuses (30) niedriger ist als der des Isolierfilms und der des Separators,
Abschnitte des Isolierfilms (10), die in Kontakt mit dem Elektrodenkörper und dem Batteriegehäuse gehalten werden, an den Separator (70), der auf der äußersten Fläche des Elektrodenkörpers positioniert ist, bzw. an das Batteriegehäuse (30) angehaftet sind,
eine erste 90°-Ablösefestigkeit eines Adhäsionsabschnitts zwischen dem Isolierfilm (10) und dem Batteriegehäuse (30) höher ist als eine zweite 90°-Ablösefestigkeit eines Adhäsionsabschnitts zwischen dem Isolierfilm (10) und dem Separator (70),
die erste 90°-Ablösefestigkeit mindestens 15 mN/cm beträgt und
die zweite 90°-Ablösefestigkeit mindestens 5 mN/cm beträgt.

2. Sekundärbatterie nach Anspruch 1, wobei
mindestens eine Fläche des Isolierfilms (10) hydrophilisiert ist, und
die hydrophilisierte Fläche einer Innenwand des Batteriegehäuses (30) zugewandt ist.

3. Sekundärbatterie nach Anspruch 1 oder 2,
wobei eine Dicke des Isolierfilms (10) nicht größer als 70 µm ist.

4. Sekundärbatterie nach einem der Ansprüche 1 bis 3,
wobei die erste 90°-Ablösefestigkeit zwischen 25 mN/cm und 50 mN/cm beträgt, und
die zweite 90°-Ablösefestigkeit zwischen 5 mN/cm und 30 mN/cm beträgt.

5. Sekundärbatterie nach einem der Ansprüche 1 bis 4,
wobei das Batteriegehäuse (30) aus Aluminium oder einer Aluminiumlegierung gebildet ist,
der Separator (70) aus Polyolefin gebildet ist und
der Isolierfilm (10) aus Polyolefin gebildet ist.

6. Sekundärbatterie nach einem der Ansprüche 1 bis 5, wobei der Elektrodenkörper (80) ein gewickelter Elektrodenkörper ist.

## Revendications

1. Batterie secondaire, comportant :
un corps d'électrode (80) comprenant une électrode positive, une électrode négative, et un séparateur (70) qui sont positionnés sur une surface la plus à l'extérieur du corps d'électrode ;
un boîtier de batterie (30) qui reçoit le corps d'électrode ; et
un film isolant (10) qui est maintenu en contact avec le corps d'électrode et le boîtier de batterie ;
un coefficient de dilatation thermique du boîtier de batterie (30) est inférieur à ceux du film isolant et du séparateur,
des parties du film isolant (10), qui sont maintenues en contact avec le corps d'électrode et le boîtier de batterie, sont collées sur le séparateur (70), qui est positionné sur la surface la plus à l'extérieur du corps d'électrode, et le boîtier de batterie (30), respectivement,
une première résistance au pelage à 90 degrés d'une partie d'adhésion entre le film isolant (10) et le boîtier de batterie (30) est plus élevée qu'une deuxième résistance au pelage à 90 degrés d'une partie d'adhésion entre le film isolant (10) et le séparateur (70),
la première résistance au pelage à 90 degrés est égale ou supérieure à 15 mN/cm, et
la deuxième résistance au pelage à 90 degrés est égale ou supérieure à 5 mN/cm.

2. Batterie secondaire selon la revendication 1, dans laquelle
au moins une surface du film isolant (10) est rendue hydrophile, et
la surface rendue hydrophile fait face à une paroi intérieure du boîtier de batterie (30).

3. Batterie secondaire selon la revendication 1 ou 2, dans laquelle
une épaisseur du film isolant (10) est inférieure ou égale à 70 µm.

4. Batterie secondaire selon l'une quelconque des revendications 1 à 3, dans laquelle
la première résistance au pelage à 90 degrés est comprise entre 25 mN/cm et 50 mN/cm, et
la deuxième résistance au pelage à 90 degrés est comprise entre 5 mN/cm et 30 mN/cm.

5. Batterie secondaire selon l'une quelconque des revendications 1 à 4, dans laquelle
le boîtier de batterie (30) est formé en aluminium ou en alliage d'aluminium,
le séparateur (70) est formé en polyoléfine, et
le film isolant (10) est formé en polyoléfine.

6. Batterie secondaire selon l'une quelconque des revendications 1 à 5, dans laquelle
le corps d'électrode (80) est un corps d'électrode enroulée.
